# EUROPEAN PATENT APPLICATION

(11) **EP 4 269 061 A1**
(43) Date of publication of application: **01.11.2023**
(21) Application number: 21910594.7
(22) Date of filing: 16.12.2021
(51) Int. Cl.: B29C 45/14, B32B 27/18, B32B 27/30, B32B 27/32, C09D 4/02, C09D 5/24, C09D 125/02, C09D 133/06, C09D 201/00, B29C 33/12, B29C 70/00, C09D 7/61, B32B 7/027, C08J 7/04

(54) **COATING MATERIAL COMPOSITION**

(30) Priority: 23.12.2020 JP 2020213791; 23.12.2020 JP 2020213792; 11.11.2021 JP 2021183771
(71) Applicant: Kansai Paint Co., Ltd, Amagasaki-shi, Hyogo 661-8555 (JP)
(72) Inventor: KOMURA, Katsuto, Hiratsuka-shi, Kanagawa 254-8562 (JP); FUJIWARA, Mizuki, Hiratsuka-shi, Kanagawa 254-8562 (JP)
(74) Representative: Müller-Boré & Partner Patentanwälte PartG mbB
(86) International application number: PCT/JP2021/046525
(87) International publication number: WO 2022/138446

(57) **Abstract**

A coating composition containing: (A) a polymerizable unsaturated compound having one polymerizable unsaturated group per molecule and having a hydrocarbon group having from 4 to 24 carbons; (B) a polymerizable unsaturated compound having one polymerizable unsaturated group per molecule and having a hydroxyl group; (C) a polymerizable unsaturated compound having two polymerizable unsaturated groups per molecule, a homopolymer of the compound having a glass transition temperature in a range from 100 to 250°C; (D) a polymerizable unsaturated compound having from 3 to 9 polymerizable unsaturated groups per molecule and containing a linear alkylene group that has a total of 6 to 14 carbons and may contain an ester bond; and (E) a polymerization initiator.

## Description

### Technical Field

The present invention relates to a coating composition that is suitable for in-mold coating applications and particularly can form a coating film with excellent adhesion to polyolefin materials without blending a chlorinated polyolefin, a modified polyolefin, or the like.

### Background Art

In recent years, various plastic materials have been used as alternative materials of metals in automobile parts and the like, and various coatings are applied to molded members. An in-mold coating method is attracting attention as a process-saving molding and coating method with less burden on the environment. In an in-mold coating method, a coating composition is injected into a gap provided between a surface of a plastic molded product molded in the mold and a mold surface, and then the coating composition is cured in the mold to produce an integrated molded product in which the coating film closely adheres to the molded product surface. The present applicant has also proposed an in-mold coating method by which a coating film with excellent adhesion and finished property can be formed using a thermosetting resin composition having a specific composition for in-mold coating of a molded product made of a fiber-reinforced plastic material (FRP) in Patent Literature 1.

On the other hand, for in-mold coat coating compositions that ensures adherence to nonpolar thermoplastic substrates, such as polyolefin substrates, which are frequently used as plastic materials, blending an acrylic-modified polyolefin or a chlorinated polyolefin has typically been proposed (e.g., such as Patent Literature 2 and Patent Literature 3).

However, these compositions have a problem of poor compatibility between a polyolefin component and another resin component, resulting in poor long-term storage stability, and there is a need for compositions that adhere to polyolefin substrates without blending an acrylic-modified polyolefin or a chlorinated polyolefin.

In contrast, Patent Literature 4 discloses use of a thermosetting coating composition on a polyolefin substrate, the thermosetting coating composition containing a saturated aliphatic polyester urethane intermediate, a (meth)acrylate that is a saturated aliphatic (meth)acrylate or a saturated cycloaliphatic (meth)acrylate, one or more hydroxyalkyl (meth)acrylates, a polyacrylate ester of an alkylene polyol, one or more vinyl-substituted aromatic compounds, and an initiator capable of generating free radicals.

On the other hand, when topcoat is applied to an in-mold coated article as described above, the in-mold coated article desirably has conductivity from the viewpoint of improving a finished property, and conductive paints used for an in-mold coating method have already been proposed. Also, an in-mold coating composition containing not only carbon black as a conductive material but also a conductive particle and the like, the conductive particle being formed by coating a surface of an inorganic particle with a conductive metal oxide particle, has been proposed (see, e.g., Patent Literature 5).

### Citation List

### Patent Literature

Patent Literature 1: JP 2013-184307 A
Patent Literature 2: JP 2002-249680 A
Patent Literature 3: JP 2003-138165 A
Patent Literature 4: JP 2004-502570 A
Patent Literature 5: JP 2010-138248 A

### Summary of Invention

### Technical Problem

However, the composition of Patent Literature 4, when used for in-mold coating applications, has had a problem of insufficient releasability from the mold, resulting in a poor yield in the production of coated articles.

An object of the present invention is to provide a coating composition that can be applied to various plastic materials and particularly can form a coating film with excellent adhesion to polyolefin materials without blending an acrylic-modified polyolefin or a chlorinated polyolefin and is suitable for in-mold coating applications.

### Solution to Problem

To achieve the above object, the present invention includes, for example, the following aspects.

That is, in an aspect of the present invention, there is provided a coating composition containing:
(A) a polymerizable unsaturated compound having one polymerizable unsaturated group per molecule and having a hydrocarbon group having from 4 to 24 carbons;
(B) a polymerizable unsaturated compound having one polymerizable unsaturated group per molecule and having a hydroxyl group;
(C) a polymerizable unsaturated compound having two polymerizable unsaturated groups per molecule, a homopolymer of the compound having a glass transition temperature in a range from 100 to 250°C;
(D) a polymerizable unsaturated compound having from 3 to 9 polymerizable unsaturated groups per molecule and containing a linear alkylene group that has a total of 6 to 14 carbons and may contain an ester bond; and
(E) a polymerization initiator.

In an embodiment, in the description in the coating composition, a content of the component (C) is from 5 to 35 parts by mass based on 100 parts by mass of a total solid content of the components (A), (B), (C), and (D).

In another embodiment, in the coating composition according to any of the above, a content of the component (C) is from 5 to 35 parts by mass based on 100 parts by mass of a total solid content of the components (A), (B), (C), and (D).

In another embodiment, in the coating composition according to any of the above, the component (A) contains a vinyl aromatic compound (a1) and/or an esterified product (a2) of a monohydric alcohol having from 4 to 24 carbons and (meth)acrylic acid.

In another embodiment, in the coating composition according to any of the above, the component (C) contains an esterified product (c1) of a polyhydric alcohol having an alicyclic skeleton and (meth)acrylic acid.

In another embodiment, in the coating composition according to any of the above, the component (D) contains a caprolactone-modified polyfunctional (meth)acrylate (d1) that is an esterified product of a polyhydric alcohol and a reaction product of (meth)acrylic acid and ε-caprolactone.

In another embodiment, in the coating composition according to any of the above, a content of the component (A) is from 30 to 91 parts by mass, a content of the component (B) is from 1 to 40 parts by mass, a content of the component (C) is from 5 to 35 parts by mass, and a content of the component (D) is from 3 to 40 parts by mass based on 100 parts by mass of a total solid content of the components (A), (B), (C), and (D).

In another embodiment, the coating composition according to any of the above further contains a conductive pigment (F).

In another embodiment, the conductive pigment (F) is a conductive carbon.

Another aspect of the present invention provides a coated article, wherein a coating film made of the coating composition according to any of the above is formed on a surface of a molded product made of a plastic material.

In an embodiment, the plastic material is a polyolefin in the coated article.

In another embodiment, at least one layer of colored coating film is further formed in the coated article.

In another embodiment, at least one layer of clear coating film is further formed in the coated article.

In yet another aspect of the present invention, there is provided an in-mold coating method including:
heating and molding a plastic material in a mold;
then injecting a coating composition for in-mold coating between the resulting molded product and an inner wall of the mold and curing the coating composition for in-mold coating; and
thereafter, removing the coated molded product from the mold,
wherein the coating composition for in-mold coating is the coating composition according to any of the above.

In still another aspect of the present invention, there is provided a coated article obtained by the in-mold coating method described above.

### Advantageous Effects of Invention

According to the present invention, the coating composition can be suitably used in in-mold coating applications and can be applied to various plastic materials, and particularly can form a coating film with excellent adhesion to polyolefin materials without blending an acrylic-modified polyolefin or a chlorinated polyolefin.

### Description of Embodiments

Hereinafter, aspects of the present invention will be described.

A coating composition of the present invention contains:
(A) a polymerizable unsaturated compound having one polymerizable unsaturated group per molecule and having a hydrocarbon group having from 4 to 24 carbons;
(B) a polymerizable unsaturated compound having one polymerizable unsaturated group per molecule and having a hydroxyl group;
(C) a polymerizable unsaturated compound having two polymerizable unsaturated groups per molecule and a homopolymer of the compound having a glass transition temperature in a range from 100 to 250°C;
(D) a polymerizable unsaturated compound having from 3 to 9 polymerizable unsaturated groups per molecule and containing a linear alkylene group that has a total of 6 to 14 carbons and may contain an ester bond; and
(E) a polymerization initiator.

The polymerizable unsaturated compound (A) has one polymerizable unsaturated group per molecule and has a hydrocarbon group having from 4 to 24 carbons. The polymerizable unsaturated group is an unsaturated group capable of radical polymerization, and specific examples include an acryloyl group, a methacryloyl group, a vinyl group, an allyl group, a propenyl group, an isopropenyl group, a maleimide group, and a vinyl ether group.

The polymerizable unsaturated compound (A) can contain a vinyl aromatic compound (a1) and/or an esterified product (a2) of a monohydric alcohol having from 4 to 24 carbons and (meth)acrylic acid, and particularly from the viewpoint of permeability into polyolefin materials, a vinyl aromatic compound (a1) is suitably used.

Examples of the vinyl aromatic compound (a1) include styrene, α-methylstyrene, vinyltoluene, and α-chlorostyrene. Among them, styrene is preferred from the viewpoint of adhesion between a coating film formed and a substrate.

When the coating composition of the present invention contains the vinyl aromatic compound (a1), its content is preferably from 20 to 91 parts by mass and more preferably from 35 to 65 parts by mass based on 100 parts by mass of a total solid content of the components (A), (B), (C), and (D) from the viewpoints of adherence between a coating film formed and a substrate, and the like.

Examples of the esterified product (a2) of a monohydric alcohol having from 4 to 24 carbons and (meth)acrylic acid include n-butyl (meth)acrylate, iso-butyl (meth)acrylate, t-butyl (meth)acrylate, 2-ethylhexyl (meth)acrylate, neopentyl (meth)acrylate, lauryl (meth)acrylate, cyclohexyl (meth)acrylate, tetrahydrofurfuryl (meth)acrylate, isobornyl (meth)acrylate, phenyl (meth)acrylate, benzyl (meth)acrylate, 4-t-butylcyclohexyl (meth)acrylate, and N-acryloyloxyethyl hexahydrophthalimide.

When the coating composition of the present invention contains the esterified product (a2) of a monohydric alcohol having from 4 to 24 carbons and (meth)acrylic acid, its content is preferably from 5 to 40 parts by mass and more preferably from 10 to 30 parts by mass based on 100 parts by mass of a total solid content of the components (A), (B), (C), and (D) from the viewpoints of adherence between a coating film formed and a substrate, and the like.

In the present specification, "(meth)acrylate" means an acrylate or a methacrylate, and "(meth)acrylic acid" means acrylic acid or methacrylic acid. In addition, "(meth)acryloyl" means acryloyl or methacryloyl. Furthermore, "(meth)acrylamide" means acrylamide or methacrylamide.

The polymerizable unsaturated compound (A) can be used alone or in combination of two or more.

In the present invention, the content of the polymerizable unsaturated compound (A) is preferably from 20 to 91 parts by mass and more preferably from 35 to 65 parts by mass based on 100 parts by mass of a total solid content of the components (A), (B), (C), and (D) from the viewpoints of flexibility of a coating film formed, adherence between a coating film formed and a substrate, and the like.

Examples of the polymerizable unsaturated compound (B) having one polymerizable unsaturated group per molecule and having a hydroxyl group include hydroxyl group-containing (meth)acrylates, such as hydroxyethyl (meth)acrylate, hydroxypropyl (meth)acrylate, and hydroxybutyl (meth)acrylate.

In the present invention, the content of the polymerizable unsaturated compound (B) is preferably from 1 to 40 parts by mass and more preferably from 2 to 25 parts by mass based on 100 parts by mass of a total solid content of the components (A), (B), (C), and (D) from the viewpoints of adherence between a coating film formed and a topcoat film, and the like.

In the present invention, the polymerizable unsaturated compound (C) having two polymerizable unsaturated groups per molecule is a compound whose homopolymer has a glass transition temperature in a range from 100 to 250°C and preferably from 120 to 200°C, and is a component that increases the reaction rate of the composition and contributes to ensuring releasability particularly in in-mold coating applications.

For the glass transition temperature of the compound, a homopolymer of the compound is synthesized to have a weight average molecular weight of approximately 50000, and a value of the glass transition temperature of the homopolymer measured by differential scanning calorimetry is used. The glass transition temperature is determined by measurement using a differential scanning calorimeter by increasing the temperature from 10°C to 350°C at a rate of 20°C/min under a nitrogen atmosphere.

Examples of the polymerizable unsaturated compound (C) include dipropylene glycol di(meth)acrylate, triethylene glycol di(meth)acrylate, neopentyl glycol di(meth)acrylate, ethylene oxide-modified di(meth)acrylate of bisphenol A, propylene oxide-modified di(meth)acrylate of bisphenol A, ethylene oxide-modified di(meth)acrylate of bisphenol F, tricyclodecane dimethanol di(meth)acrylate, and tricyclodecanediol di(meth)acrylate, and these can be used alone or in combination of two or more.

The polymerizable unsaturated compound (C) suitably contains an esterified product (c1) of a polyhydric alcohol having particularly an alicyclic skeleton and (meth)acrylic acid. Examples of the alicyclic skeleton include a cyclohexane ring and a tricyclodecane ring, and examples of the esterified product (c1) of a polyhydric alcohol having an alicyclic skeleton and (meth)acrylic acid include tricyclodecane dimethanol di(meth)acrylate and tricyclodecanediol di(meth)acrylate.

In the present invention, the content of the polymerizable unsaturated compound (C) is preferably from 5 to 35 parts by mass and more preferably from 5 to 25 parts by mass based on 100 parts by mass of a total solid content of the components (A), (B), (C), and (D) from the viewpoints of improving the reaction rate, ensuring releasability of a coating film formed, and the like.

In the present invention, the polymerizable unsaturated compound (D) having from 3 to 9 polymerizable unsaturated groups per molecule is a compound containing a linear alkylene group that has a total of 6 to 14 carbons and may contain an ester bond, and is a component that increases the reaction rate of the composition and contributes to imparting toughness and flexibility to a coating film formed.

Examples of the polymerizable unsaturated compound (D) include alkyl-modified products, such as pentaerythritol tetra(meth)acrylate, pentaerythritol tri(meth)acrylate, dipentaerythritol hexa(meth)acrylate, dipentaerythritol penta(meth)acrylate, trimethylolethane tri(meth)acrylate, trimethylolpropane tri(meth)acrylate, and ditrimethylolpropane tetra(meth)acrylate; caprolactone-modified products; and polyoxyalkylene-modified products.

In particular, the polymerizable unsaturated compound (D) suitably contains a caprolactone-modified polyfunctional (meth)acrylate (d1) that is an esterified product of a polyhydric alcohol and a reaction product of (meth)acrylic acid and ε-caprolactone (ε-caprolactone-modified (meth)acrylic acid) from the viewpoint of imparting toughness and flexibility to a coating film formed. Examples of the caprolactone-modified polyfunctional (meth)acrylate (d1) include caprolactone-modified pentaerythritol tri(meth)acrylate, caprolactone-modified pentaerythritol tetra(meth)acrylate, caprolactone-modified dipentaerythritol penta(meth)acrylate, and caprolactone-modified dipentaerythritol hexa(meth)acrylate. In particular, caprolactone-modified dipentaerythritol hexa(meth)acrylate can be suitably used.

In the present invention, the content of the polymerizable unsaturated compound (D) is preferably from 3 to 40 parts by mass and more preferably from 5 to 25 parts by mass based on 100 parts by mass of a total solid content of the components (A), (B), (C), and (D) from the viewpoint of imparting toughness and flexibility to a coating film formed.

In the present invention, the polymerization initiator (E) is a polymerization initiator selected from thermal polymerization initiators and photopolymerization initiators. Among them, a thermal polymerization initiator allows formation of a coating film regardless of the shape of a substrate and thus is preferably used as at least one of the polymerization initiator. In addition, for the polymerization initiator (E), a thermal polymerization initiator and a photopolymerization initiator can also be used in combination.

The thermal polymerization initiator is a compound that generate a free radical (also in the form of an intermediate) by heating; or a mixture of these compounds. Examples of the thermal polymerization initiator include organic peroxides, such as benzoyl peroxide, octanoyl peroxide, lauroyl peroxide, stearoyl peroxide, cumene hydroperoxide, tert-butyl peroxide, tert-butyl peroxylaurate, tert-butyl peroxybenzoate, tert-butyl peroxyisopropyl carbonate, tert-butyl peroxyacetate, and diisopropylbenzene hydroperoxide; azo compounds, such as azobis(isobutyronitrile), azobis(2,4-dimethylvaleronitrile), azobis(2-methylpropionitrile), azobis(2-methylbutyronitrile), 4,4'-azobis(4-cyanobutanoic acid), dimethyl azobis(2-methylproprionate), azobis[2-methyl-N-(2-hydroxyethyl)-propionamide], and azobis{2-methyl-N-[2-(1-hydroxybutyl)]-propionamide}; and persulfate salts, such as potassium persulfate, ammonium persulfate, and sodium persulfate.

Examples of commercially available products of the thermal polymerization initiator include "VA-044", "VA-046B", "V-50", "VA-057", "VA-061", "VA-067", "VA-086", "V-60", "V-70", "V-65", "V-601", "V-59", "V-40", "VF-096", and "VAm-110" (trade names, all above available from Wako Pure Chemical Industries, Ltd.); and "PERBUTYL H", "PERBUTYL Z", "PERBUTYL O", and "PEROCTA O" (trade names, all above available from NOF Corporation).

The polymerization initiators (E) can each be used alone or in combination of two or more.

In the present invention, the content of the polymerization initiator (E) is preferably from 0.01 to 10 parts by mass and more preferably from 0.1 to 5 parts by mass based on 100 parts by mass of a total solid content of the components (A), (B), (C), and (D).

The coating composition of an embodiment of the present invention essentially contains:
the polymerizable unsaturated compound (A) having one polymerizable unsaturated group per molecule and having a hydrocarbon group having from 4 to 24 carbons;
the polymerizable unsaturated compound (B) having one polymerizable unsaturated group per molecule and having a hydroxyl group;
the polymerizable unsaturated compound (C) having two polymerizable unsaturated groups per molecule, a homopolymer of the compound having a glass transition temperature in a range from 100 to 250°C;
the polymerizable unsaturated compound (D) having from 3 to 9 polymerizable unsaturated groups per molecule and containing a linear alkylene group that has a total of 6 to 14 carbons and may contain an ester bond; and
the polymerization initiator (E).

According to the coating composition composed as described above, the composition can be applied to various plastic materials and particularly can form a coating film with excellent adhesion to polyolefin materials without blending an acrylic-modified polyolefin or a chlorinated polyolefin. Such a coating composition is suitable for in-mold coating applications.

The coating composition of the present invention can further contain a conductive pigment (F) in addition to the components described above. In the present invention, for the conductive pigment (F), any pigment that can impart conductivity to a coating film formed can be used without any particular limitation, and any form of particles, flakes, and fibers (including whiskers) can be used. Specific examples include conductive carbons, such as conductive carbon blacks, carbon nanotubes, carbon nanofibers, and carbon microcoils; metal powders, such as those of silver, nickel, copper, graphite, and aluminum; and furthermore, an antimony-doped tin oxide, a phosphorus-doped tin oxide, an acicular titanium oxide surface-coated with a tin oxide/antimony, an antimony oxide, a zinc antimonate, an indium tin oxide, and pigments obtained by coating a whisker surface of carbon or graphite with a tin oxide or the like; pigments obtained by coating a surface of flaky mica with a conductive metal oxide, such as a tin oxide or an antimony-doped tin oxide; and conductive pigments containing a tin oxide and phosphorus on a surface of a titanium dioxide particle. These can each be used alone or in combination of two or more. Among these, a conductive carbon can be particularly suitably used.

In the present invention, the content of the conductive pigment (F) is preferably from 0.2 to 200 parts by mass and more preferably from 0.4 to 150 parts by mass based on 100 parts by mass of a total solid content of the components (A), (B), (C), and (D). In particular, when a conductive carbon is used as the conductive pigment (F), the content of the conductive carbon is preferably from 0.2 to 50 parts by mass and more preferably from 0.4 to 30 parts by mass based on 100 parts by mass of a total solid content of the components (A), (B), (C), and (D).

The coating composition of an embodiment of the present invention essentially contains:
the polymerizable unsaturated compound (A) having one polymerizable unsaturated group per molecule and having a hydrocarbon group having from 4 to 24 carbons;
the polymerizable unsaturated compound (B) having one polymerizable unsaturated group per molecule and having a hydroxyl group;
the polymerizable unsaturated compound (C) having two polymerizable unsaturated groups per molecule, a homopolymer of the compound having a glass transition temperature in a range from 100 to 250°C;
the polymerizable unsaturated compound (D) having from 3 to 9 or more polymerizable unsaturated groups per molecule and containing a linear alkylene group that has a total of 6 to 14 carbons and may contain an ester bond;
the polymerization initiator (E); and
the conductive pigment (F).

According to the coating composition composed as described above, the composition can be applied to various plastic materials and particularly can form a coating film with excellent adhesion to polyolefin materials without blending an acrylic-modified polyolefin or a chlorinated polyolefin, and furthermore can provide a coated article having an excellent finished property after top coating. Such a coating composition is suitable for in-mold coating applications.

The coating composition of the present invention can further contain an ultraviolet absorber and/or a light stabilizer in addition to the components described above. In addition, the coating composition can appropriately contain as necessary an additional additive component and/or the like typically used in the field of coating, such as a resin component (such as a chlorinated polyolefin), a cross-linker, a solvent (organic solvent, water), a pigment, a curing accelerator, a polymerization inhibitor, an antioxidant, a surface conditioner, a defoamer, an emulsifier, a surfactant, an antifouling agent, a wetting agent, a thickener, a dye, a scratch resistance improver, or a gloss conditioner.

The present invention may or may not contain an acrylic-modified polyolefin, a chlorinated polyolefin, or both, but preferably contains neither an acrylic-modified polyolefin nor a chlorinated polyolefin.

In addition, when the coating composition of the present invention is applied by an in-mold coating method, it preferably contains a mold release agent.

For the ultraviolet absorber, an ultraviolet absorber that has been known in the art can be used; for example, a benzotriazole-based absorber, a triazine-based absorber, a salicylic acid derivative-based absorber, or a benzophenone-based absorber can be used. In addition, the ultraviolet absorber may have a polymerizable unsaturated group.

Specific examples of the benzotriazole-based absorber include 2-(2'-hydroxy-5'-methylphenyl)benzotriazole, 2-(2'-hydroxy-5'-t-butylphenyl)benzotriazole, 2-(2'-hydroxy-3',5'-di-t-butylphenyl)benzotriazole, 2-(2'-hydroxy-3'-t-butyl-5'-methylphenyl)-5-chlorobenzotriazole, 2-(2'-hydroxy-3',5'-di-t-butylphenyl)-5-chlorobenzotriazole, 2-(2'-hydroxy-3',5'-di-t-amylphenyl)benzotriazole, 2-(2'-hydroxy-4'-octoxyphenyl)benzotriazole, 2-{2'-hydroxy-3 '-(3",4",5",6"-tetrahydrophthalimidomethyl)-5'-methylphenyl}benzotriazole, and 2-[2-hydroxy-5-[2-(methacryloyloxy)ethyl]phenyl]-2H-benzotriazole.

Specific examples of the triazine-based absorber include 2,4-bis(2,4-dimethylphenyl)-6-(2-hydroxy-4-isooctyloxyphenyl)-1,3,5-triazine, 2-[4((2-hydroxy-3-dodecyloxypropyl)-oxy)-2-hydroxyphenyl]-4,6-bis(2,4-dimethylphenyl)-1,3,5-triazine, 2-[4-((2-hydroxy-3-tridecyloxypropyl)-oxy)-2-hydroxyphenyl]-4,6-bis(2,4-dimethylphenyl)-1,3,5-triazine, and 2-(2,4-dihydroxyphenyl)-4,6-bis(2,4-dimethylphenyl)-1,3,5-triazine.

Specific examples of the salicylic acid derivative-based absorber include phenyl salicylate, p-octylphenyl salicylate, and 4-tert-butylphenyl salicylate.

Specific examples of the benzophenone-based absorber include 4-dihydroxybenzophenone, 2-hydroxy-4-methoxybenzophenone, 2,2'-dihydroxy-4-methoxybenzophenone, 2-hydroxy-4-methoxy-2'-carboxybenzophenone, 2-hydroxy-4-methoxy-5-sulfobenzophenone trihydrate, 2,2'-dihydroxy-4,4'-dimethoxybenzophenone, 2-hydroxy-4-octoxybenzophenone, 2-hydroxy-4-octadecyloxybenzophenone, sodium 2,2'-dihydroxy-4,4'-dimethoxy-5-sulfobenzophenone, 2,2',4,4'-tetrahydroxybenzophenone, 4-dodecyloxy-2-hydroxybenzophenone, 5-chloro-2-hydroxybenzophenone, resorcinol monobenzoate, 2,4-dibenzoylresorcinol, 4,6-dibenzoylresorcinol, hydroxydodecylbenzophenone, and 2,2'-dihydroxy-4(3-methacryloxy-2-hydroxypropoxy)benzophenone.

In addition, examples of commercially available products of the ultraviolet absorber include "TINUVIN 900", "TINUVIN 928", "TINUVIN 384-2", "TINUVIN 479", "TINUVIN 405", and "TINUVIN 400", (available from BASF, trade name, TINUVIN is a registered trademark), and "RUVA 93" (available from Otsuka Chemical Co., Ltd., trade name).

When the coating composition of the present invention contains the ultraviolet absorber, the content of the ultraviolet absorber is preferably in a range from 0.5 to 10 mass%, more preferably of 0.8 to 9 mass%, and even more preferably of 1.0 to 8 mass% with respect to a total solid content of the coating composition.

The light stabilizer is used as a radical chain reaction inhibitor that traps an active radical species generated during the degradation process of a coating film, and examples include light stabilizers of a hindered amine compound.

Among the light stabilizers, examples of a light stabilizer that exhibits an excellent light stabilizing effect include hindered piperidine compounds. Examples of the hindered piperidine compound include, but are not limited to, hindered piperidine compounds of monomer type, such as bis(1,2,2,6,6-pentamethyl-4-piperidyl) sebacate, bis(2,2,6,6-tetramethyl-4-piperidinyl) sebacate, bis(N-methyl-2,2,6,6-tetramethyl-4-piperidinyl) sebacate, 4-benzoyloxy-2,2',6,6'-tetramethylpiperidine, and bis(1,2,2,6,6-pentamethyl-4-piperidyl){[3,5-bis(1,1-dimethylethyl)-4-hydroxyphenyl]methyl}butyl malonate; hindered piperidine compounds of oligomer type, such as poly{[6-(1,1,3,3-tetramethylbutyl)imino-1,3,5-triazin-2,4-diyl][(2,2,6,6-tetramethyl-4-piperidyl)imino]hexamethylene[(2,2,6,6-tetramethyl-4-piperidyl)iminol]}; and hindered piperidine compounds of polyester bond type, such as a polyesterified product of 4-hydroxy-2,2,6,6-tetramethyl-1-piperidine ethanol and succinic acid. For the light stabilizer, a known polymerizable light stabilizer can also be used.

Examples of commercially available products of the light stabilizer include "TINUVIN 123", "TINUVIN 152", and "TINUVIN 292" (available from BASF, trade name, TINUVIN is a registered trademark), "HOSTAVIN 3058" (available from Clariant AG, trade name, Hostavin is a registered trademark), and "ADK STAB LA-82" (available from ADEKA Corporation, trade name, ADKSTAB is a registered trademark).

When the coating composition of the present invention contains the light stabilizer, the content of the light stabilizer is preferably in a range from 0.5 to 10 mass%, more preferably of 0.8 to 9 mass%, and even more preferably of 1.0 to 8 mass% with respect to a total solid content of the coating composition.

For the solvent, for example, an organic solvent, water, or the like can be used. Examples of the organic solvent include ketone-based solvents, such as acetone, methyl ethyl ketone and methyl isobutyl ketone; ester-based solvents, such as ethyl acetate, butyl acetate, methyl benzoate, ethyl ethoxypropionate, ethyl propionate, and methyl propionate; ether-based solvents, such as tetrahydrofuran, dioxane, and dimethoxyethane; glycol ether-based solvents, such as ethylene glycol monomethyl ether, ethylene glycol monoethyl ether, diethylene glycol monomethyl ether, propylene glycol monomethyl ether acetate, and 3-methoxybutyl acetate; aromatic solvents, such as toluene, xylene, and "Swasol 1000" (trade name, a high boiling point petroleum-based solvent, available from Cosmo Oil Co., Ltd.); and aliphatic hydrocarbon-based solvents, such as hexanes and heptanes.

Examples of the pigment include effect pigments, color pigments, and extender pigments. The pigments can be used alone or in combination of two or more.

Examples of the curing accelerator include tertiary amines, such as diethylenetriamine, triethanolamine, 4-dimethylaminobenzoic acid, and 3-dimethylaminobenzoic acid; quaternary ammonium salts; and metal driers, such as cobalt naphthenate, copper naphthenate, barium naphthenate, cobalt octylate, manganese octylate, zinc octylate, and vanadium octylate. These can be used alone or in combination of two or more.

Examples of the mold release agent include stearic acid and stearate salts, such as zinc stearate, aluminum stearate, magnesium stearate, and calcium stearate; nonionic surfactants, such as poly(oxyethylene) alkyl ethers and sorbitan alkyl esters; fluorine-based compounds, such as poly(tetrafluoroethylene), fluoropolyether, perfluoroalkyl esters, and perfluoroalkyl ester salts; phosphate ester compounds, such as phosphate monoesters and/or phosphate diesters having an alkyl chain, oxyethylene chain, or the like; soybean oil lecithin, silicone oil, fatty acid esters, and fatty acid alcohol dibasic acid esters. These can be used alone or in combination of two or more.

When the coating composition of the present invention contains the mold release agent, the content of the mold release agent is preferably in a range from 0.1 to 10 parts by mass, more preferably from 0.2 to 7 parts by mass, and even more preferably from 0.3 to 5 parts by mass based on 100 parts by mass of a solid content in the coating composition from the viewpoints of adherence between a coating film formed and a substrate, weather resistance, and coating film hardness.

The coating composition of the present invention obtained as described above is preferably what is called a solventless coating composition with a solid content preferably of 90 to 100 mass%, more preferably of 95 to 100 mass%, and even more preferably of 99 to 100 mass%, and is more preferably a thermosetting type coating composition. In the present specification, the solid content refers to all components except the solvent among the components constituting the coating composition.

In the present invention, a target coating film can be formed by applying the coating composition obtained as described above on a substrate to form a wet coating film (uncured coating film), and curing the wet coating film. The material of the substrate may be any of an inorganic material, an organic material, or a hybrid material of an organic material and an inorganic material, and in particular, a coating film made of the coating composition can be formed on a surface of a molded product made of a plastic material.

Examples of the plastic material include acrylic resins, such as poly(methyl methacrylate); polyester resins, such as poly(ethylene terephthalate), polyethylene naphthalate), poly(1,4-cyclohexanedimethylene terephthalate), poly(ethylene-1,2-diphenoxyethane-4,4'-dicarboxylate), and poly(butylene terephthalate); epoxy resins represented by a commercially available product, such as Epikote (trade name: available from Yuka Shell Epoxy Co., Ltd.); polycarbonate resins; polyimide resins; novolac resins; phenolic resins; acrylonitrile-butadienestyrene (ABS) resins; acrylonitrile-ethylene-styrene (AES) resins; acrylonitrile-styrene-acrylate (ASA) resins; vinyl chloride resins; vinylidene chloride resin; polyurethane resins; cellulose esters (e.g., triacetylcellulose, diacetylcellulose, propionylcellulose, butyryl cellulose, acetylpropionylcellulose, and nitrocellulose); polyamides; polystyrenes (e.g., syndiotactic polystyrenes); polyolefins (e.g., polypropylene, polyethylene, and polymethylpentene); polysulfones; polyethersulfones; polyarylates; polyetherimides; polyetherketones; and various fiber reinforced plastics (which may be hereinafter abbreviated as FRP materials or simply as FRP). In particular, a polyolefin is suitable.

The coating composition of the present invention can be made into a coating composition with relatively low viscosity even when the composition has a high solid content and thus can be suitably used in painting by an in-mold coating method.

In the present invention, the in-mold coating method includes:
heating and molding a plastic material in a mold;
then injecting the coating composition of the present invention as a coating composition for in-mold coating between the resulting molded product and an inner wall of the mold and curing the coating composition for in-mold coating; and
thereafter, removing the coated molded product from the mold.

At least one layer of colored coating film can be further formed on a coated article obtained by the in-mold coating method.

Examples of a colored coating composition (hereinafter, also referred to simply as a colored paint) that forms a colored coating film include colored base paints that have been known in the art. For example, an organic solvent-based, water-based, or powder-based paint containing a resin component, a colorant, and a solvent can be used.

For the resin component (also referred to as a base resin), a resin for paint of a normal temperature drying type, a normal temperature curing type, or a thermosetting type can be used, and examples include base resins, such as acrylic resins, vinyl resins, polyester resins, and alkyd resins. For electrostatic coating, the resin component used in the colored paint may be, for example, a resin having a reactive functional group, such as a hydroxyl group, an epoxy group, a carboxyl group, or a silanol group, such as an acrylic resin, a polyester resin, or an alkyd resin.

Furthermore, in the present invention, in which a cross-linker, such as an amino resin such as a melamine resin or a urea resin, a (blocked) polyisocyanate compound, a polyepoxide, or a polycarboxylic acid, can also be used in combination, in particular, a colored coating film made of a paint containing a base resin having a hydroxyl group and a polyisocyanate compound as a cross-linker is suitable from the viewpoint of adhesion to the coated article of the present invention.

For the colorant, any color pigment, effect pigment, dye, or the like that has been known in the art can be used. Examples of the color pigment include inorganic pigments, such as titanium oxide, zinc oxide, carbon black, cadmium red, molybdenum red, chrome yellow, chromium oxide, Prussian blue, and cobalt blue; and organic pigments, such as azo pigments, phthalocyanine pigments, quinacridone pigments, isoindoline pigments, threne-based pigments, and perylene pigments. The effect pigment is a pigment that imparts a glittering brightness or optical coherence to a coating film, and examples include scale-shaped aluminum, bronze, stainless steel, nickel powder, mica-like iron oxide, mica, and mica coated with a metal oxide. The colorant is not limited to these listed above.

The solvent may be water, an organic solvent, or both.

The colored paint may contain, as necessary, an additive for paint, such as a matting agent for controlling glossness of a coating film, an extender pigment, a curing catalyst, an ultraviolet absorber, a coated surface conditioner, a rheology control agent, an antioxidant, a defoamer, a wax, or a preservative.

For the matting agent for controlling glossness of a coating film, there can be used calcium carbonate, kaolin, clay, diatomaceous earth, white carbon, talc, silica powder, wollastonite, or the like.

In addition, in the present invention, at least one layer of clear coating film can be further formed on a coated article having at least one layer of colored coating film further formed on the coated article obtained by the in-mold coating method.

Examples of a clear coating composition (hereinafter also referred to simply as a clear paint) that forms a clear coating film include clear coating compositions that have been known in the art. For example, an organic solvent-based, water-based, or powder-based paint containing a resin component and a solvent can be used.

For the resin component, a typical resin for paint of a normal temperature drying type, a normal temperature curing type, or a thermosetting type can be used, and examples include base resins, such as acrylic resins, vinyl resins, polyester resins, alkyd resins, fluororesins, urethane resins, and silicon-containing resins. For electrostatic coating, the resin may be an acrylic resin, a vinyl resin, a polyester resin, an alkyd resin, a fluororesin, a urethane resin, or a silicon-containing resin containing at least one reactive functional group, such as a hydroxyl group, a carboxyl group, a silanol group, or an epoxy group. Furthermore, there can also be used in combination a cross-linker, such as an amino resin such as a melamine resin or a urea resin, a (blocked) polyisocyanate compound, an epoxy compound, a carboxyl group-containing compound, an acid anhydride, or an alkoxysilane group-containing compound. The cross-linker is particularly suitably a polyisocyanate compound. In the present invention, a clear coating film made of a paint containing a base resin having a hydroxyl group and a polyisocyanate compound as a cross-linker is particularly suitable from the viewpoint of adhesion to the coated article.

The solvent may be water, an organic solvent, or both.

The clear paint may contain, as necessary, an additive for paint, such as an ultraviolet absorber, a light stabilizer, a curing catalyst, a coated surface conditioner, a rheology control agent, an antioxidant, a defoamer, or a wax. For the clear paint, there can be used, for example, an organic solvent-based or water-based thermosetting paint containing: resin components, such as a base resin and a cross-linker; an organic solvent, water, and/or the like; and as necessary further containing the additive for paint; and having transparency to an extent that the underlayer coating film can be visually recognized through the clear coating film formed.

For the topcoat paint, a colored paint or a clear paint may each be alone used and painted; or the colored paint is used as a base paint, and the base paint and a clear paint can also be sequentially painted. In addition, for example, a white base paint and an interference pearl-colored base paint may be sequentially applied on the coating film made of the coating composition of the present invention to form a multilayer film as a colored base coating film layer.

For the method of coating the topcoat paint, such as the colored paint and clear paint described above, a method that has been known in the art can be appropriately employed. In some embodiments, the coating method is an in-mold coating method. In some embodiments, the coating method is electrostatic coating.

When a coating film is formed by an in-mold coating method using the colored paint or clear paint described above, the paint is desirably what is called a solventless type, and the surface to be coated is preferably cured by heating.

When a coating film made of the colored paint or clear paint described above is formed, the colored paint is applied on the coating film made of the uncured or cured coating composition of the present invention to give a dry film thickness in a range preferably of 5 to 50 µm, more preferably of 5 to 30 µm, and even more preferably of 10 to 20 µm; and the resulting coating film surface can be set at room temperature for approximately 1 to 60 minutes or preheated at a temperature of about 40 to about 80°C for approximately 1 to 60 minutes as necessary; or alternatively the resulting coating film surface can be cured by heating at a temperature of about 60 to about 120°C and preferably of about 80 to about 120°C for approximately 20 to 40 minutes. In the present invention, particularly suitably, the colored base paint is not cured after being applied, and then the clear paint is applied.

Coating of the clear paint described above can be performed by applying the clear paint on the uncured or cured colored base coating film to give a dry film thickness in a range preferably of 10 to 50 µm and more preferably of 20 to 40 µm; as necessary, setting the resulting coating film surface at room temperature for approximately 1 to 60 minutes or preheating the resulting coating film surface at a temperature of about 40 to about 80°C for approximately 1 to 60 minutes; and then curing the resulting coating film surface by heating at a temperature of about 60 to about 120°C and preferably of about 70 to about 120°C for approximately 20 to 40 minutes.

### Examples

The present invention will be described more specifically below with reference to examples and comparative examples. However, the present invention is not limited to these examples only. Both "parts" and "%" are based on mass.

### Production of coating compositions

### Examples 1 to 10 and Comparative Examples 1 to 6

The components of (A) to (D) were placed in a reaction vessel equipped with a thermometer, a thermostat, and a stirring device to give a solid content listed in Table 1. The temperature was raised to 50°C while the mixture was stirred, and then the temperature was maintained at 50°C, and the mixture was stirred for 3 hours. The mixture was then cooled to room temperature, and 3.5 parts (solid content) of a polymerization initiator ("PERBUTYL O", t-butylperoxy-2-ethylhexanoate) as the component (E) and further zinc stearate or the like according to examples were added. The mixture was uniformly mixed, and each of coating compositions (1) to (16) with a solid content of 99.6% was obtained.

### [Table 1]

**Table 1**

| | | | Examples | | | | | | | | | | Comparative Example | | | | | |
|---|---|---|---|---|---|---|---|---|---|---|---|---|---|---|---|---|---|---|
| | | | 1 | 2 | 3 | 4 | 5 | 6 | 7 | 8 | 9 | 10 | 1 | 2 | 3 | 4 | 5 | 6 |
| Composition No. | | | 1 | 2 | 3 | 4 | 5 | 6 | 7 | 8 | 9 | 10 | | 11 12 | 13 | 14 | 15 | 16 |
| Blended composition | (A) | Styrene | 70 | | 40 | 40 | 50 | 50 | 60 | 60 | 40 | 40 | 50 | 50 | 20 | 50 | 25 | |
| | | Vinyltoluene | | 50 | | | | | | | | | | | | | | |
| | | 2-Ethylhexyl acrylate | | | 25 | | | | | | | | | | | | | |
| | | Lauryl methacrylate | | | | 25 | | | | | 25 | | | | | | | |
| | | Methyl methacrylate | | | | | | | | | | | | | | | | 60 |
| | | Isobornyl acrylate | | | | | | | | | | | | | | | 25 | |
| | (B) | 4-Hydroxybutyl acrylate | 10 | 10 | 5 | 5 | | 10 | 5 | 20 | 5 | 10 | | 40 | 10 | 25 | 15 | 5 |
| | | 2-Hydroxyethyl acrylate | | | | | 10 | | | | | | | | | | | |
| | (C) | Tricyclodecane dimethanol diacrylate Tg: 190°C | 15 | 15 | 20 | 15 | 15 | | 20 | 15 | 15 | 15 | 30 | | 60 | 25 | | 20 |
| | | Neopentyl glycol diacrylate Tg: 117°C | | | | | | 30 | | | | | | | | | | |
| | | 1,6-Hexanediol diacrylate Tg: 63°C | | | | | | | | | | | | | | | 15 | |
| | (D) | Caprolactone-modified dipentaerythritol hexaacrylate | 5 | 25 | 10 | 15 | 25 | 10 | | 5 | 15 | 15 | 20 | 10 | 10 | | 20 | 15 |
| | | Dipentaerythritol hexaacrylate | | | | | | | 15 | | | | | | | | | |
| | (E) | PERBUTYL O | 3.5 | 3.5 | 3.5 | 3.5 | 3.5 | 3.5 | 3.5 | 3.5 | 3.5 | 3.5 | 3.5 | 3.5 | 3.5 | 3.5 | 3.5 | 3.5 |
| | | Zinc stearate | | | | | | | | | 3 | | | | | | | |
| | | Chlorinated polyolefin | | | | | | | | | | 20 | | | | | | |
| Evaluation | Test plate 1 | Adhesion (initial) | B | B | A | A | B | B | A | A | A | B | C | D | D | C | C | D |
| | | Releasability | B | A | B | B | B | B | A | B | A | B | C | D | C | C | D | C |
| | Test plate 2 | Adhesion (initial) | B | B | A | A | B | B | A | B | A | A | D | C | C | C | C | C |
| | | Adhesion (water resistance) | B | B | B | A | B | B | A | B | A | B | D | D | C | D | D | C |

### Preparation of test plates 1

Surfaces of 100 mm x 150 mm x 3.0 mm polypropylene plates were degreased with isopropyl alcohol, and the coating compositions obtained in examples or comparative examples were each applied thereon using a bar coater to give a cured film thickness of 50 µm and set at normal temperature for one minute. Then, a 200 mm x 200 mm x 50 mm "NAK80" (trade name: a metal plate available from Daido Steel Co., Ltd.) heated to 120°C in advance was pressed and fixed at a pressure of 200 kg/cm² to each plate. The plates were then each retained at 120°C for 3 minutes to cure the coating composition, then the metal plates were each removed, and test plates 1 were prepared.

### Preparation of test plates 2

A coating composition for a topcoat colored basecoat (trade name "WBC-713T", available from Kansai Paint Co., Ltd., acrylic resin-amino resin aqueous coating composition) was applied on the coated plate of each test plate 1 to give a film thickness of 20 µm. The test plates were allowed to stand for 2 minutes and then preheated at 80°C for 3 minutes. Then, "Soflex 7175 Clear" (available from Kansai Paint Co., Ltd., trade name, acrylic urethane-based organic solvent type clear paint) as a topcoat clear coating composition was applied on the uncured coated surface of each test plate to give a film thickness of 35 µm. The plates were allowed to stand for 7 minutes, then heated at 120°C for 20 minutes to simultaneously cure both of these coating films, and test plates 2 were prepared.

Each resulting test plate 1 was evaluated for adhesion (initial) and releasability, and each test plate 2 was evaluated for adhesion (initial) and adhesion (water resistance). The results are collectively listed in Table 1.

### Adhesion (initial):

On the coated surface of each test plate, 100 cross cuts of 2 mm x 2 mm were made in accordance with JIS K 5600-5-6 (1990), and an adhesive tape was adhered to the surface. The adhesive tape was quickly peeled off, then a remaining state of the cross cut coating film was examined, and the adhesion was evaluated according to the criteria below. A, B, C, and D mean the following, respectively, and A and B mean pass.

A: Number of remaining cross cuts/total number of cross cuts = 100/100 with no edge chipping.
B: Number of remaining cross cuts/total number of cross cuts = 100/100 with edge chipping.
C: Number of remaining cross cuts/total number of cross cuts = from 90 to 99/100.
D: Number of remaining cross cuts/total number of cross cuts = from 0 to 89/100.

### Adhesion (water resistance):

Each test plate was immersed in warm water at 40°C, removed after 240 hours, subjected to the same adhesion test as in the above adhesion (initial), and evaluated according to the above criteria.

### Releasability:

The ease of peeling the test plate 1 from the metal plate used in preparation of the test plate 1 was evaluated. A, B, C, and D mean the following, respectively, and A and B mean pass.

A: The test plate 1 was peeled off from the metal plate by its own weight.
B: The test plate 1 was not immediately peeled off from the metal plate by its own weight, and when the test plate 1 was peeled off using a scraper or the like, the test plate 1 was peeled off without defects in the coating film and the substrate.
C: The test plate 1 was not immediately peeled off from the metal plate by its own weight, and when the test plate 1 was peeled off using a scraper or the like, from 0 to less than 10% by area of the coating film was peeled off.
D: The test plate 1 was not peeled off from the metal plate, and when the test plate 1 was peeled off using a scraper or the like, a defect occurred in either one of 11% or more by area of the coating film or the substrate, or both.

### Preparation of test plates 3 to 6

### Example 11

A colored coating composition No. 1 (note 1) was applied using a bar coater to the coated plate of the test plate 1 prepared using the coating composition (4) to give a cured film thickness of 50 µm and set at normal temperature for one minute. Then, a 200 mm x 200 mm x 50 mm "NAK80" (trade name: a metal plate available from Daido Steel Co., Ltd.) heated to 80°C in advance was pressed and fixed at a pressure of 200 kg/cm². The plate was then retained at 80°C for one minute to cure the coating composition, then the metal plate was removed, and a colored coating film layer was formed. A clear coating composition No. 1 (note 3) was applied on the colored coating film using a bar coater to give a cured film thickness of 50 µm and set at normal temperature for one minute. Then, a 200 mm x 200 mm x 50 mm "NAK80" (trade name: a metal plate available from Daido Steel Co., Ltd.) heated to 80°C in advance was pressed and fixed at a pressure of 200 kg/cm². The plate was then retained at 80°C for one minute to cure the coating composition, then the metal plate was removed to form a clear coating film layer, and a test plate 3 was prepared.

### Example 12

In Example 11, a test plate 4 was prepared in the same manner as in Example 11 except that a clear coating composition No. 2 (note 4) was used in place of the clear coating composition No. 1 (note 3).

### Example 13

In Example 11, a test plate 5 was prepared in the same manner as in Example 11 except that a colored coating composition No. 2 (note 2) was used in place of the colored coating composition No. 1 (note 1).

### Example 14

In Example 13, a test plate 6 was prepared in the same manner as in Example 13 except that a clear coating composition No. 2 (note 4) was used in place of the clear coating composition No. 1 (note 3).

The test plates obtained in Examples 11 to 14 were evaluated for adhesion (initial) and adhesion (water resistance) in the same manner as in the adhesion test described above and further evaluated for a finished property (Yes, glossy; No, not glossy). Results are listed in Table 2.

(Note 1) Colored coating composition No. 1: In a vessel were blended 32 parts of "Desmophen XP2488" (trade name, available from Covestro AG, hydroxyl group-containing polyester resin), 62 parts of "Sumidur N3300" (trade name, available from Sumika Covestro Urethane Co., Ltd., isocyanurate ring adduct of hexamethylene diisocyanate), 3 parts of benzyl alcohol, 1 part of carbon black, 0.25 parts of "DISPERBYK-2013" (trade name, available from BYK, dispersant), 0.4 parts of "DISPERBYK-333" (trade name, available from BYK, surface conditioner), 1 part of "TINUVIN400" (trade name, available from BASF, ultraviolet absorber), 1 part of "TINUVIN292" (trade name, available from BASF, light stabilizer), 0.6 parts of "NEOSTANN U-830" (trade name, available from Nitto Kasei Co., Ltd., tin catalyst), and 1 part of zinc stearate and uniformly mixed, and a colored coating composition No. 1 with a viscosity of 6000 mPa•s as measured by a B-type viscometer at 25°C and 60 rpm and a solid content of 99% was obtained.

(Note 2) Colored coating composition No. 2: In a vessel were blended 26 parts of "Desmophen XP2488" (trade name, available from Covestro AG, hydroxyl group-containing polyester resin), 7 parts of "Desmophen VPLS 2249/1" (trade name, available from Covestro AG, hydroxyl group-containing polyester resin), 61 parts of "Sumidur N3300" (trade name, available from Sumika Covestro Urethane Co., Ltd., isocyanurate ring adduct of hexamethylene diisocyanate), 3 parts of benzyl alcohol, 1 part of carbon black, 0.25 parts of "DISPERBYK-2013" (trade name, available from BYK, dispersant), 0.4 parts of "DISPERBYK-333" (trade name, available from BYK, surface conditioner), 1 part of "TINUVIN400" (trade name, available from BASF, ultraviolet absorber), 1 part of "TINUVIN292" (trade name, available from BASF, light stabilizer), 0.6 parts of "NEOSTANN U-830" (trade name, available from Nitto Kasei Co., Ltd., tin catalyst), and 1 part of zinc stearate and uniformly mixed, and a colored coating composition No. 2 with a viscosity of 6000 mPa•s as measured by a B-type viscometer at 25°C and 60 rpm and a solid content of 99% was obtained.

(Note 3) Clear coating composition No. 1: In a vessel were blended 32 parts of "Desmophen XP2488" (trade name, available from Covestro AG, hydroxyl group-containing polyester resin), 62 parts of "Sumidur N3300" (trade name, available from Sumika Covestro Urethane Co., Ltd., isocyanurate ring adduct of hexamethylene diisocyanate), 3 parts of benzyl alcohol, 0.4 parts of "DISPERBYK-333" (trade name, available from BYK, surface conditioner), 1 part of "TINUVIN400" (trade name, available from BASF, ultraviolet absorber), 1 part of "TINUVIN292" (trade name, available from BASF, light stabilizer), 0.6 parts of "NEOSTANN U-830" (trade name, available from Nitto Kasei Co., Ltd., tin catalyst), and 1 part of zinc stearate and uniformly mixed, and a clear coating composition No. 1 with a viscosity of 4000 mPa•s as measured by a B-type viscometer at 25°C and 60 rpm and a solid content of 99% was obtained.

(Note 4) Clear coating composition No. 2: In a vessel were blended 26 parts of "Desmophen XP2488" (trade name, available from Covestro AG, hydroxyl group-containing polyester resin), 7 parts of "Desmophen VPLS 2249/1" (trade name, available from Covestro AG, hydroxyl group-containing polyester resin), 61 parts of "Sumidur N3300" (trade name, available from Sumika Covestro Urethane Co., Ltd., isocyanurate ring adduct of hexamethylene diisocyanate), 3 parts of benzyl alcohol, 0.4 parts of "DISPERBYK-333" (trade name, available from BYK, surface conditioner), 1 part of "TINUVIN400" (trade name, available from BASF, ultraviolet absorber), 1 part of "TINUVIN292" (trade name, available from BASF, light stabilizer), 0.6 parts of "NEOSTANN U-830" (trade name, available from Nitto Kasei Co., Ltd., tin catalyst), and 1 part of zinc stearate and uniformly mixed, and a clear coating composition No. 2 with a viscosity of 4000 mPa•s as measured by a B-type viscometer at 25°C and 60 rpm and a solid content of 99% was obtained.

### [Table 2]

**Table 2**

| | | Examples | | | |
|---|---|---|---|---|---|
| | | 11 | 12 | 13 | 14 |
| Composition No. | Primer layer | (4) | (4) | (4) | (4) |
| | Colored layer | 1 | 1 | 2 | 2 |
| | Clear layer | 1 | 2 | 1 | 2 |
| Evaluation | Adhesion (initial) | A | A | A | A |
| | Adhesion (water resistance) | A | A | A | A |
| | Gloss | Yes | Yes | Yes | Yes |

### Production of coating compositions

### Examples 15 to 24 and Comparative Examples 7 to 12

The components of (A) to (D) were placed in a reaction vessel equipped with a thermometer, a thermostat, and a stirring device to give a solid content listed in Table 3. The temperature was raised to 50°C while the mixture was stirred, and then the temperature was maintained at 50°C, and the mixture was stirred for 3 hours. The mixture was then cooled to room temperature, and a conductive carbon ("Ketjen Black EC600JD", trade name, available from Lion Corporation) as the component (E) in a solid content listed in Table 1, 3.5 parts (solid content) of a polymerization initiator ("PERBUTYL O", t-butylperoxy-2-ethylhexanoate) as the component (F), and further zinc stearate or the like according to examples were added. The mixture was uniformly mixed, and each of coating compositions (17) to (32) with a solid content of 99.6% was obtained.

The conductive titanium oxide in Table 3 is "FT-4000" (trade name, available from Ishihara Sangyo Kaisha, Ltd.).

### [Table 3]

**Table 3**

| | | | Examples | | | | | | | | | | Comparative Examp le | | | | | |
|---|---|---|---|---|---|---|---|---|---|---|---|---|---|---|---|---|---|---|
| | | | 15 | 16 | 17 | 18 | 19 | 20 | 21 | 22 | 23 | 24 | 7 | 8 | 9 | 10 | 11 | 12 |
| Composition No. | | | 17 | 18 | 19 | 20 | 21 | 22 | 23 | 24 | 25 | 26 | 27 | 28 | 29 | 30 | 31 | 32 |
| Blended composition | (A) | Styrene | 70 | | 40 | 40 | 50 | 50 | 60 | 60 | 40 | 40 | 50 | 50 | 50 | 25 | | 70 |
| | | Vinyltoluene | | 50 | | | | | | | | | | | | | | |
| | | 2-Ethylhexyl acrylate | | | 25 | | | | | | | | | | | | | |
| | | Lauryl methacrylate | | | | 25 | | | | | 25 | | | | | | | |
| | | Methyl methacrylate | | | | | | | | | | | | | | | 60 | |
| | | Isobornyl acrylate | | | | | | | | | | | | | | 25 | | |
| | (B) | 4-Hydroxybutyl acrylate | 10 | 10 | 5 | 5 | | 10 | 5 | 20 | 5 | 10 | | 40 | 25 | 15 | 5 | 10 |
| | | 2-Hydroxyethyl acrylate | | | | | 10 | | | | | | | | | | | |
| | (C) | Tricyclodecane dimethanol diacrylate Tg: 190°C | 15 | 15 | 20 | 15 | 15 | | 20 | 15 | 15 | 15 | 30 | | 25 | | 20 | 15 |
| | | Neopentyl glycol diacrylate Tg: 117°C | | | | | | 30 | | | | | | | | | | |
| | | 1,6-Hexanediol diacrylate Tg: 63°C | | | | | | | | | | | | | | 15 | | |
| | (D) | Caprolactone-modified dipentaerythritol hexaacrylate | 5 | 25 | 10 | 15 | 25 | 10 | | 5 | 15 | 15 | 20 | 10 | | 20 | 15 | 5 |
| | | Dipentaerythritol hexaacrylate | | | | | | | 15 | | | | | | | | | |
| | (E) | PERBUTYL O | 3.5 | 3.5 | 3.5 | 3.5 | 3.5 | 3.5 | 3.5 | 3.5 | 3.5 | 3.5 | 3.5 | 3.5 | 3.5 | 3.5 | 3.5 | 3.5 |
| | (F) | Conductive carbon black | 0.5 | 5 | 3 | 1 | 5 | 10 | 5 | | 5 | 5 | 0.5 | 0.5 | 0.5 | 0.5 | 0.5 | |
| | | FT-4000 | | | | | | | | 100 | | | | | | | | |
| | | Zinc stearate | | | | | | | | | 3 | | | | | | | |
| | | Chlorinated polyolefin | | | | | | | | | | 20 | | | | | | |
| Evaluation | Test plate 7 | Adhesion (initial) | B | B | A | A | B | B | A | A | A | B | C | D | C | C | D | B |
| | | Releasability | B | A | B | B | B | B | A | B | A | B | C | D | C | D | C | B |
| | Test plate 8 | Adhesion (initial) | B | B | A | A | B | B | A | B | A | A | D | C | C | C | C | B |
| | | Adhesion (water resistance) | B | B | B | A | B | B | A | B | A | B | D | D | D | D | C | B |
| | | Finished property | A | B | B | A | B | B | B | B | A | B | B | B | B | B | B | C |

### Preparation of test plates 7

Surfaces of 100 mm x 150 mm x 3.0 mm polypropylene plates were degreased with isopropyl alcohol, and coating compositions obtained in examples or comparative examples were each applied thereon using a bar coater to give a cured film thickness of 50 µm and set at normal temperature for one minute. Then, a 200 mm x 200 mm x 50 mm "NAK80" (trade name: a metal plate available from Daido Steel Co., Ltd.) heated to 120°C in advance was pressed and fixed at a pressure of 200 kg/cm² to each plate. The plates were then each retained at 120°C for 3 minutes to cure the coating composition, then the metal plates were each removed, and test plates 7 were prepared.

### Preparation of test plates 8

A coating composition for a topcoat colored basecoat (trade name "WBC-713T", available from Kansai Paint Co., Ltd., acrylic resin-amino resin aqueous coating composition) was electrostatically applied to the coated plate of each test plate 7 to give a film thickness of 20 µm. The test plates were allowed to stand for 2 minutes and then preheated at 80°C for 3 minutes. Then, "Soflex 7175 Clear" (available from Kansai Paint Co., Ltd., trade name, acrylic urethane-based organic solvent type clear paint) as a topcoat clear coating composition was electrostatically applied on the uncured coated surface of each test plate to give a film thickness of 35 µm. The plates were allowed to stand for 7 minutes, then heated at 120°C for 20 minutes to simultaneously cure both of these coating films, and test plates 8 were prepared.

Each resulting test plate 7 was evaluated for adhesion (initial) and releasability, and each test plate 8 was evaluated for adhesion (initial), adhesion (water resistance), and a finished property. The results are collectively listed in Table 3.

### Adhesion (initial):

On the coated surface of each test plate, 100 cross cuts of 2 mm x 2 mm were made in accordance with JIS K 5600-5-6 (1990), and an adhesive tape was adhered to the surface. The adhesive tape was quickly peeled off, then a remaining state of the cross cut coating film was examined, and the adhesion was evaluated according to the criteria below. A, B, C, and D mean the following, respectively, and A and B mean pass.

A: Number of remaining cross cuts/total number of cross cuts = 100/100 with no edge chipping.
B: Number of remaining cross cuts/total number of cross cuts = 100/100 with edge chipping.
C: Number of remaining cross cuts/total number of cross cuts = from 90 to 99/100.
D: Number of remaining cross cuts/total number of cross cuts = from 0 to 89/100.

### Adhesion (water resistance):

Each test plate was immersed in warm water at 40°C, removed after 240 hours, subjected to the same adhesion test as in the above adhesion (initial), and evaluated according to the above criteria.

### Releasability:

The ease of peeling the test plate 7 from the metal plate used in preparation of the test plate 7 was evaluated. A, B, C, and D mean the following, respectively, and A and B mean pass.

A: The test plate 7 was peeled off from the metal plate by its own weight.
B: The test plate 7 was not immediately peeled off from the metal plate by its own weight, and when the test plate 7 was peeled off using a scraper or the like, the test plate 7 was peeled off without defects in the coating film and the substrate.
C: The test plate 7 was not immediately peeled off from the metal plate by its own weight, and when the test plate 7 was peeled off using a scraper or the like, from 0 to less than 10% by area of the coating film was peeled off.
D: The test plate 7 was not peeled off from the metal plate, and when the test plate 7 was peeled off using a scraper or the like, a defect occurred in either one of 11% or more by area of the coating film or the substrate, or both.

### Finished property:

The coating film surface of the test plate 8 was evaluated using a W4 value measured using a "Wave Scan DOI" (trade name, available from BYK-Gardner GmbH). Smaller W4 values indicate that the coating film surface has higher image clarity.
A: The W4 value is lower than 10.0.
B: The W4 value is from 10.0 to 20.0.
C: The W4 value is greater than 20.0.

## Claims

1. A coating composition comprising:
(A) a polymerizable unsaturated compound having one polymerizable unsaturated group per molecule and having a hydrocarbon group having from 4 to 24 carbons;
(B) a polymerizable unsaturated compound having one polymerizable unsaturated group per molecule and having a hydroxyl group;
(C) a polymerizable unsaturated compound having two polymerizable unsaturated groups per molecule, a homopolymer of the compound having a glass transition temperature in a range from 100 to 250°C;
(D) a polymerizable unsaturated compound having from 3 to 9 polymerizable unsaturated groups per molecule and containing a linear alkylene group that has a total of 6 to 14 carbons and may contain an ester bond; and
(E) a polymerization initiator.

2. The coating composition according to claim 1, wherein a content of the component (C) is from 5 to 35 parts by mass based on 100 parts by mass of a total solid content of the components (A), (B), (C), and (D).

3. The coating composition according to claim 1 or 2, wherein the component (A) comprises a vinyl aromatic compound (a1) and/or an esterified product (a2) of a monohydric alcohol having from 4 to 24 carbons and (meth)acrylic acid.

4. The coating composition according to any one of claims 1 to 3, wherein the component (C) comprises an esterified product (c1) of a polyhydric alcohol having an alicyclic skeleton and (meth)acrylic acid.

5. The coating composition according to any one of claims 1 to 4, wherein the component (D) comprises a caprolactone-modified polyfunctional (meth)acrylate (d1) that is an esterified product of a polyhydric alcohol and a reaction product of (meth)acrylic acid and ε-caprolactone.

6. The coating composition according to any one of claims 1 to 5, wherein a content of the component (A) is from 30 to 91 parts by mass, a content of the component (B) is from 1 to 40 parts by mass, a content of the component (C) is from 5 to 35 parts by mass, and a content of the component (D) is from 3 to 40 parts by mass based on 100 parts by mass of a total solid content of the components (A), (B), (C), and (D).

7. The coating composition according to any one of claims 1 to 6, further comprising a conductive pigment (F).

8. The coating composition according to claim 7, wherein the conductive pigment (F) is a conductive carbon.

9. A coated article comprising a coating film made of the coating composition according to any one of claims 1 to 8 formed on a surface of a molded product made of a plastic material.

10. The coated article according to claim 9, wherein the plastic material is a polyolefin.

11. The coated article according to claim 9 or 10, wherein at least one layer of colored coating film is further formed.

12. The coated article according to any one of claims 9 to 11, wherein at least one layer of clear coating film is further formed.

13. An in-mold coating method comprising:
heating and molding a plastic material in a mold;
then injecting a coating composition for in-mold coating between the resulting molded product and an inner wall of the mold and curing the coating composition for in-mold coating; and
thereafter, removing the coated molded product from the mold,
wherein the coating composition for in-mold coating is the coating composition according to any one of claims 1 to 8.

14. A coated article obtained by the in-mold coating method according to in claim 13.
